# EUROPÄISCHE PATENTSCHRIFT

(11) **EP 1 110 996 B1**
(45) Veröffentlichungstag und Bekanntmachung des Hinweises auf die Patenterteilung: **06.04.2005**
(21) Anmeldenummer: 00128306.8
(22) Anmeldetag: 22.12.2000
(51) Int. Cl.: C08K 3/00, C08J 3/20, C09K 11/00

(54) **Verfahren und Mittel zur Codierung von thermoplastischen Kunststoffteilen**
Process and means for coding of thermoplastic plastic parts
Procédé et moyen pour codage de part de plastique thermoplastique

(30) Priorität: 24.12.1999 DE 19962953
(43) Veröffentlichungstag der Anmeldung: 27.06.2001
(73) Patentinhaber: Bundesdruckerei GmbH, 10969 Berlin (DE)
(72) Erfinder: Kappe, Frank, 33375 Rheda-Wiedenbrück (DE); Schmidt, Wolfgang, 13593 Berlin (DE)
(74) Vertreter: Haar, Lucas H., Dipl.-Ing.

(56) Entgegenhaltungen:
- EP-A- 0 711 812
- US-A- 5 374 377
- US-A- 5 665 793
- DATABASE WPI Section Ch, Week 199228 Derwent Publications Ltd., London, GB; Class A23, AN 1992-231960 XP002164045 & JP 04 159316 A (DOOL U), 2. Juni 1992 (1992-06-02)

## Beschreibung

Gegenstand der Erfindung ist ein Verfahren zur Codierung von thermoplastischen Kunststoffteilen nach dem Patentanspruch 1.

Bei dem Verfahren geht es darum, daß die Notwendigkeit gesehen wird, daß man Spritzgussartikel, die allgemein aus thermoplastischen Kunststoffen hergestellt werden, mit einer Codierung versehen will, um die Echtheit des Artikels zu überprüfen bzw. nachzuweisen.

Bisher ist es lediglich bekannt, entsprechende Etiketten oder Markierungen nachträglich nach der Herstellung dieses Gegenstandes an dem Gegenstand anzubringen, was mit der Gefahr verbunden ist, daß der Gegenstand bzw. die Anbringung der Markierung geändert werden kann.

Aus der DE 33 07 622 geht ein Markierungsmittel für Textilien, insbesondere für Teppiche, und ein Verfahren zu deren Herstellung und Anwendung hervor. Dabei wird jedoch beschrieben, daß die haft- und waschfesten Pigmentpartikel in die Faser durch Druck und Hitze eingepreßt werden. Es wird also ebenfalls nachträglich von außen her in oder auf das Produkt eine Kennzeichnung angebracht. Die DE 33 01 357 C1 beschreibt Markierungsmittel, Verfahren zu ihrer Herstellung und ihrer Verwendung zur Markierung von feindispersen Systemen. Darin werden Markierungsstoffe für Sprengstoffe und dgl. Stoffe vorgeschlagen. Die Markierungssubstanz wird zu einem Pulver verarbeitet und direkt in den Sprengstoff oder das Herbizid eingebracht.

In der US 4,324,711 wird eine schmelzadhesive Straßenfarbe beschrieben, die eine verbesserte Stabilität bei niedrigen Temperaturen aufweisen soll. Hierzu werden Markierungssubstanzen in Form von pulverförmigen Pigmenten in die thermoplastische Substanz eingebracht. Aus der DE 198 43 603 geht ein Fluorpolymer hervor, welches in Pulverform vorliegt und mit einem pulverförmigen Pigment gemischt wird. Das erhaltene Mischprodukt wird auf einen zu kennzeichnenden Gegenstand aufgebracht, wonach ein thermisches Aufschmelzen des auf den zu kennzeichnenden Gegenstand erfolgt.

Allen Druckschriften gemeinsam ist die Tatsache, daß die Markierungsstoffe direkt in oder auf das zu markierende Produkt ein- oder aufgebracht werden, wodurch lokal eine relativ hohe Konzentration des Markierungsstoffes auftritt. Eine relativ gleichmäßige Verteilung ist nur mit hohem Aufwand möglich.

Die Druckschrift WO 00/46285 A1 beschreibt thermoplastische Formmassen für verbesserte mechanische Eigenschaften und verbesserte antistatische Wirkung. Es wird angegeben, daß Pulver aus anorganischen Verbindungen in die thermoplastischen Kunststoffe eingearbeitet werden können. Ein Verfahren zur Codierung von Kunststoffprodukten wird nicht gezeigt.

Ein Verfahren zur Herstellung von Kunststoffprodukten, die mit einem Markierungsmittel versehen sind, wird in der Druckschrift DE 44 34 815 A1 dargestellt. Als Markierungsmittel werden gegenüber dem Kunststoff chemisch inerte, anorganische Verbindungen verwendet, welche einen Schmelzpunkt aufweisen, der oberhalb des Schmelzpunktes des Kunststoffs liegt.

In der Druckschrift EP 0 711 812 A1 wird ein Verfahren zum Färben von Kunststoffen beschrieben, bei dem Farbstoffe oder Farbstoffgemische mit Kunststoffgranulat oder -pulver vermischt und anschließend mittels Extrudieren der Mischung zu Fasern, Folien oder Granulaten weiterverarbeitet werden.

Der Erfindung liegt deshalb die **Aufgabe** zugrunde, ein Verfahren zur Herstellung eines codierten Gegenstandes vorzuschlagen, mit dem der fertig hergestellte Gegenstand so codiert werden kann, daß die Codierung einfach nachweisbar ist und nicht ohne weiteres entfernt werden kann. Hierbei soll eine gleichmäßige Verteilung der Codierungsmittel über den codierten Gegenstand erreicht werden

Zur Lösung der gestellten Aufgabe ist die Erfindung durch die technische Lehre des Anspruchs 1 gekennzeichnet.

Wesentliches Merkmal der Erfindung ist, daß ausgehend von einem wärmeschmelzbaren Kunststoffgranulat eine entsprechende Markierungssubstanz in einer Schmelze mit dem Granulat verschmolzen wird. Eine derartige Markierungssubstanz kann aus verschiedenartigen Stoffen bestehen, insbesondere aus anorganischen Substanzen wie z. B. Zink, Zinksulfat, Zinksulfit, aus Photolumineszenz-Markierungsstoffen, aus IR-Lumineszenz-Markierungsstoffen, aus Markierungsstoffen die dem Upconversion-Effekt oder dem Downconversion-Effekt unterliegen, aus elektrisch leitenden Partikeln, aus magnetischen Partikeln oder dergleichen mehr. Hierbei muß auch das mit der Markierungssubstanz versehene Markierungsgranulat einen höheren Schmelzpunkt aufweisen als das zu verarbeitende Kunststoffgranulat.

Unter einem Upconversion-Effekt ist zu verstehen, daß lumineszierende Teilchen mit Strahlungsenergie mit einer bestimmten Wellenlänge bestrahlt werden und diese mit einer kürzeren Wellenlänge zurückstrahlen. Beim Downconversion-Effekt wird dagegen eine gegenüber der zugeführten Wellenlänge längere Wellenlänge zurückgestrahlt. Ein ausführliches Schrifttum dazu stellt "Ullmann's Encyclopedia of Industrial Chemistry" dar, herausgegeben von VCH Verlagsgesellschaft mbH, D-6940 Weinheim, 1990.

Selbstverständlich können auch organische Substanzen zur Markierung herangezogen werden.

Wichtig ist nur, daß das Granulat mit derartigen Markierungsstoffen versetzt wird und dann geschmolzen wird, wobei dann diese Schmelze in einem Extruder zu entsprechenden Fäden gezogen wird, wobei diese Fäden beispielsweise eine Dicke von 12 µm bis 100 µm aufweisen. Es werden also derartige Fäden im Extruder gezogen und dann danach nach dem Aushärten auf eine Länge von z. B. 0,5 cm gekürzt. Das bedeutet, daß nach der Herstellung der Sicherheitsfäden in diesen die Markierungsstoffe in den Sicherheitsfäden mit eingeschmolzen und damit mit diesen verbunden sind. Sie stellen den späteren Nachweis auf Echtheit sicher, und sind sozusagen wie in einem Container darin in entsprechender Konzentration vorgehalten um mittels diesem dem nächsten Verfahrensschritt zugeführt zu werden.

In einem speziellen Verfahren ist es vorgesehen, daß die Markierungssubstanzen aus Nanoskalierten Pigmenten bestehen. Die Markierungssubstanzen sind dabei Submicron bzw. Nanopartikel in der Größenordnung von Beispielsweise 20 nm - 500 nm. Dadurch ergibt sich ein extrem hoher Oberflächenfaktor für die eingebrachten Partikel.

Die so hergestellten Markierungsfäden sind also mit der vorher erwähnten Substanz markiert und sie werden nun in die Ausgangsschmelze für die Herstellung eines Spritzgussartikels eingebracht und mit dem dort befindlichen Granulat vermischt. Somit ist es möglich gezielt geformte Strukturen für die Markierungssubstanzen zur Verfügung zustellen. Diese können alle möglichen geometrischen Formen aufweisen und unterschiedlichste Konzentrationen einzelner Markierungsstoffe oder auch von Gemischen solcher beinhalten.

Es findet dann ein an sich bekanntes Spritzguss-, Hohlblas- oder ein anderes Formverfahren statt, wie z. B. Extrudieren, Folienextrusions-, Folienkoextrusions-, Dünnfilmgieß- oder Laminationsverfahren und dergleichen mehr, so daß also dafür gesorgt wird, daß sich die Markierungsfäden in einem bestimmten Gewichts- und Volumenverhältnis mit dem Granulat für die Herstellung des Kunststoffartikels vermischen und in diesem eine homogene Mischung ergeben. Es können also sowohl feste Kunststoffartikel als auch Folien und dgl. hergestellt und markiert werden. Es können auch Schichten übereinanderlaminiert werden, zwischen denen die Markierungssubstanzen eingelagert sind und den gewünschten Effekt hervorrufen.

Wenn nun in dem Kunststoffformverfahren der Gegenstand hergestellt ist und aushärtet, dann ist der gesamte Gegenstand mit den Markierungsfäden durchsetzt, die also im ganzen Gegenstand fast gleichmäßig verteilt sind. In speziellen Ausführungsformen ist es auch möglich gezielt Bereiche mit höheren Anreicherungen mit Markierungsfäden herzustellen wie z. B. in einer Ecke einer Box oder dgl. mehr.

Die Markierungssubstanzen im fertiggestellten Kunststoffprodukt können somit gezielt geformte Strukturen aufweisen, die der Struktur des Markierungsgranulates entsprechen. So können beispielsweise Sicherheitsfäden mit sternförmigem Querschnitt eingebracht werden die beispielsweise mit lumineszierenden Eigenschaften versehen sind, so daß das Endprodukt in der Dunkelheit sternförmige Abstrahlung an den Markierungsstellen aufweist.

Dabei ist es vorgesehen, daß sowohl die Markierungssubstanzen als auch das Markierungsgranulat einen höheren Schmelzpunkt aufweisen als das zum Endprodukt zu verarbeitende Kunststoffgranulat.

Es kann nun mit bekannten Erkennungsverfahren festgestellt bzw. überprüft werden, ob die Fasern im Gegenstand vorhanden sind oder nicht, und damit kann die Echtheit des hergestellten Gegenstandes überprüft werden.

Derartige Fasern sind sowohl an der Oberfläche des Gegenstandes als auch im Volumen des Gegenstandes selbst erkennbar und damit auch detektierbar.

Selbst wenn man also die Oberfläche des Gegenstandes mit entsprechenden Lackoder Schutzfolien überzieht, kann man trotzdem mittels berührungsloser Detektion die Fasern nachweisen. Es könnte beispielsweise der Gegenstand mit einem entsprechenden Detektionslicht bestrahlt werden und wenn diese Fasern auf ihre eine IR-Anregung, auf eine Photolumineszenz oder eine Upconversion-Anregung reagieren kann die Echtheit des Gegenstandes festgestellt werden.

Dies geht ebenfalls mit elektrisch leitenden oder magnetischen Partikeln, weil durch eine entsprechende Untersuchungsmethode ebenfalls an der Oberfläche des Gegenstandes entweder die elektrische Leitfähigkeit oder auch der Magnetismus feststellbar ist.

Diese Effekte sind jedoch ebenfalls nicht auf die Oberfläche begrenzt, es kann selbstverständlich auch die elektrische Leitfähigkeit mit einem Schnitt in den Gegenstand und durch Untersuchung der Schnittflächen festgestellt werden neben der direkten Messung der elektrischen Leitfähigkeit kann natürlich das Verhalten dieses Körpers im Elektrowechselfeld geprüft werden, beispielsweise kann eine Kapazitätsmessung vorgenommen werden, wobei dann diese elektrisch leitenden Fasern ebenfalls die Kapazität verändern.

Gleiches gilt analog für die magnetischen Eigenschaften dieses Körpers.

Wichtig ist, daß durch den Zusatz der Markierungssubstanzen die sonstigen physikalischen und/oder chemischen Eigenschaften des hergestellten Gegenstandes nicht verändert werden, insbesondere nicht die mechanischen und die elektrischen oder magnetischen Eigenschaften. Außerdem handelt es sich um ein sehr kostengünstiges Verfahren und die Markierungssubstanzen sind bei dieser Markierungsart optisch nicht sichtbar.

Die Faserquerschnitte der Markierungsfäden müssen nicht rund zu sein, sondern sie können jede beliebige Profilierung aufweisen, z. B. auch elliptisch, sternförmig oder die Form von Kristallen oder wie auch immer.

Auch ist die Länge der im Gegenstand eingebrachten Fasern nicht zwangsläufig die oben genannte Länge, sondern es können auch andere beliebige Längen festgesetzt werden, wie z. B. eine Länge von 1mm bis 10 mm oder auch darüberhinausgehend.

Im übrigen wird nochmals darauf hingewiesen, daß die Markierungssubstanz aus einem Stoff mit nachweisbaren physikalischen und/oder chemischen Eigenschaften besteht, und daß es sich in unterschiedlichen Ausführungsformen auch um entsprechende Gemische von Markierungssubstanzen mit unterschiedlichen Eigenschaften handeln kann. Es können dabei sowohl Stoffe mit unterschiedlichen nachweisbaren physikalischen als auch mit unterschiedlichen nachweisbaren chemischen Eigenschaften gemischt eingebracht sein. Auch die Mischung von Stoffen mit physikalischen Eigenschaften mit Stoffen mit chemischen Eigenschaften sind vorgesehen.

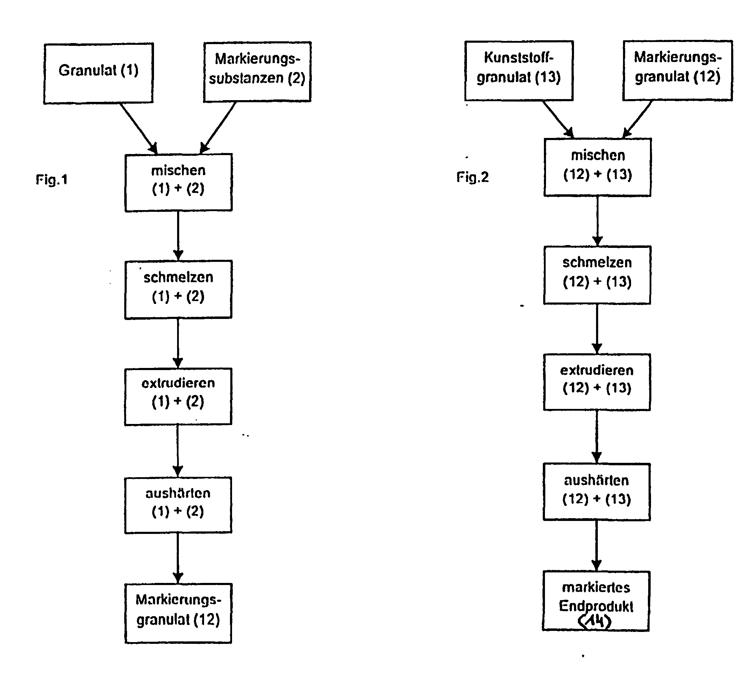

Anhand zweier Ablaufdiagramme, Fig. 1 und Fig. 2, im Anhang zum schriftlichen Teil der vorliegenden Erfindung ist das Verfahren zur Codierung von thermoplastischen Kunststoffprodukten noch näher dargestellt.

Es zeigen die Darstellungen:
in Fig.1 ein Ablaufdiagramm eines Herstellungsverfahrens für Markierungsgranulat,
in Fig. 2 ein Ablaufdiagramm eines Herstellungsverfahrens für ein markiertes Endprodukt und
in Fig. 3 einen Überblick über das erfindungsgemäße Verfahren von den Grundsubstanzen bis hin zum fertigen Endprodukt.

Es wird dabei in Fig. 1 das Verfahren zur Herstellung eines Markierungsgranulates 12 aufgezeigt. Zu Beginn des Verfahrens sind die beiden Ausgangsmaterialien Granulat 1 und Markierungssubstanzen 2 getrennt bevorratet, wobei die Markierungssubstanzen 2 ,wie bereits angeführt, aus unterschiedlichen Materialien und Gemischen bestehen können, welche auch entsprechend unterschiedliche Eigenschaften aufweisen. Es wird dabei darauf hingewiesen, daß es nicht notwendig ist alle in den Figuren und in der Beschreibung angeführten Substanzen in die Sicherheitsfäden 12 einzubringen, sondern daß es durchaus möglich ist die Markierungssubstanzen als einzelne Stoffe oder in gezielt ausgewählten Kombinationen mit dem Granulat 1 zu vermengen und daraus die Sicherheitsfäden 12 zu spinnen.

Die Markierungssubstanzen 2 können nun aus anorganischen Substanzen wie Zink, Zinksulfit, Zinksulfat, oder photolumineszierenden Substanzen, IR-Lumineszenzierenden Substanzen, Substanzen mit Upconversion Effekt, Elektrisch leitenden Substanzen, Magnetisch wirksamen Substanzen oder dgl. mehr bestehen.

Im Weiteren wird jedoch nicht zwischen Markierungssubstanzen 2 unterschieden die aus nur einem Stoff oder aus einem Stoffgemisch bestehen. Es wird generell der Begriff Markierungssubstanzen 2 verwendet. Diese Markierungssubstanzen 2 werden mit einem Granulat gemischt, anschließend geschmolzen sonach extrudiert und anschließend Ausgehärtet. Nach dem Aushärten ist das Markierungsgranulat zur Weiterverarbeitung gebrauchsfertig. Es weist entsprechend ausgeformte Strukturen auf, und wird in einem weiteren Verarbeitungsprozess mit Kunststoffgranulat 13 in gewünschten Verhältnis vermischt und weiterverarbeitet.

Dieser Prozess beginnt wiederum, wie in Fig. 2 dargestellt, mit der Mischung der Komponenten Kunststoffgranulat 13 und Markierungsgranulat 12. Anschließend wird dieses Gemisch geschmolzen, extrudiert und ausgehärtet, wonach das markierte Endprodukt 14 fertig ist, das entsprechend den Eigenschaften der verwendeten Markierungsmaterialien codiert und damit detektierbar ist. Dabei wird nochmals darauf hingewiesen, daß in einer speziellen Ausführungsform der vorliegenden Erfindung es vorgesehen ist, daß sowohl die Markierungssubstanzen 2 als auch das Markierungsgranulat 12 einen höheren Schmelzpunkt aufweisen als das zu verarbeitende Kunststoffgranulat 13.

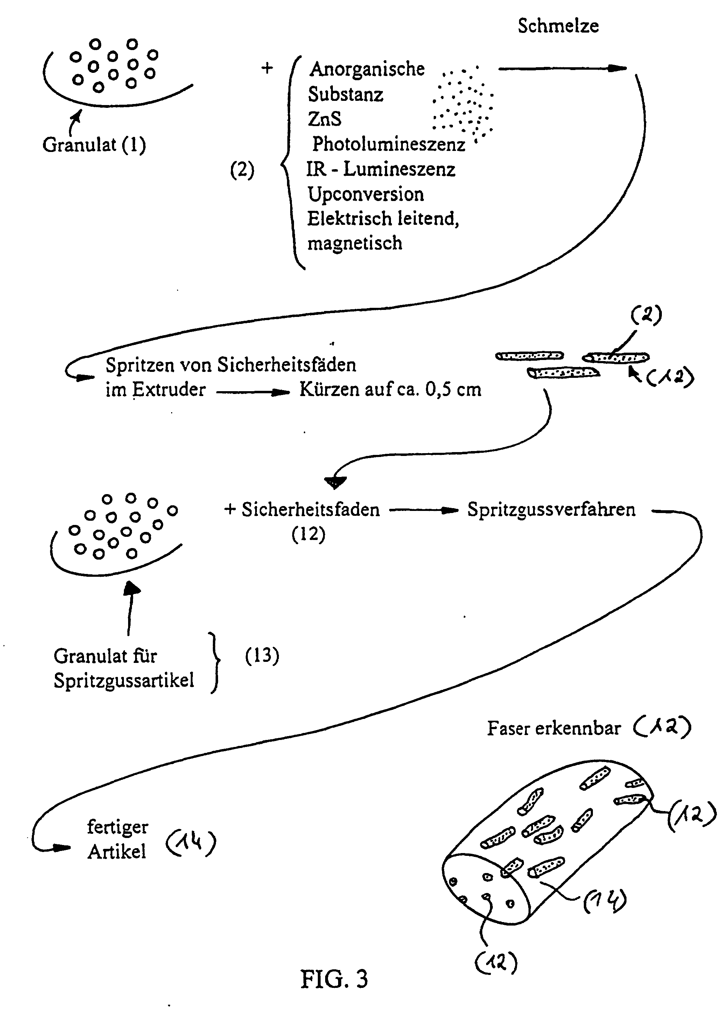

Die Darstellung in der Fig. 3 zeigt einen Überblick über das erfindungsgemäße Verfahren von den Grundsubstanzen bis hin zum fertigen Endprodukt, wobei die einzelnen Stadien des Verfahrens aufgezeigt sind. Die Grafik beginnt mit der Darstellung des Granulates 1 in der Form von einer Menge von einzelnen Granulatelementen. Diesem Granulat wird/werden Markierungssubstanzen 2 in der Form von anorganischen Substanzen, ZnS, Phosphorlumineszenspartikel, IR-Lumineszenspartikel, Elektrolumineszenz-Pigmenten, Partikel mit Upconversioneffekten, Partikel mit Downconversioneffekten, Partikel mit elektrisch leitenden Eigenschaften, Partikel mit magnetischen Eigenschaften, udglm. beigefügt. Dabei wird an dieser Stelle nochmals darauf hingewiesen, daß sowohl die Beimengung einer einzelnen Markeirungssubstanz als auch die Beimengung von Kombinationen dieser Markierungssubstanzen vorgesehen ist. Die Mischung hängt jeweils vom Anwendungsfall ab.

Nachdem das Granulat 1 mit den Markierungssubstanzen 2 vermengt ist wird dieses Gemisch einer Schmelze zugeführt und geschmolzen. Die Schmelze wird anschließend Extrudiert, so daß sich, in einer speziellen Ausführungsform der Verarbeitung, Sicherheitsfäden ausbilden, die entsprechend dem Mischungsverhältnis die Markierungssubstanzen in sich dispergiert aufweisen. Diese Sicherheitsfäden werden anschließend ausgehärtet und danach gekürzt, so daß sie in einer gewünschten Länge vorliegen. Diese Länge kann ebenfalls wahlweise vorgegeben werden. In weiteren Ausführungsformen ist es vorgesehen, daß die Sicherheitsfäden nicht in der Form von Fäden ausgebildet sind, sondern daß das Gemisch Granulat/Markierungssubstanzen gezielt ausgebildete Formen wie Kristalle, Triangel, Ringe, Rechtecke, Ketten oder dgl. mehr Ausbilden. Sie bilden das Markierungsgranulat 12.

Das Markierungsgranulat 12 bildet dabei in der Form als Markierungsfäden z.B. Fäden in einer bestimmten vorgegebenen Länge aus wie z. B. 0,5cm. Die Länge der Fäden ist jedoch in keiner Weise zwingend vom Verfahren abhängig. Es können alle denkbaren und sinnvollen Längen hergestellt werden.

Nachdem dieses Zwischenprodukt hergestellt ist kann es wahlweise abgefüllt und verpackt, oder unmittelbar einem weiteren Verarbeitungsvorgang zugeführt werden. Im zweiten Fall wird das so gewonnene Markierungsgranulat 12 unmittelbar mit einem thermoplastischen Kunststoffgranulat 13 vermengt und vermischt. Im ersten Fall erfolgt die Vermengung zu einem späteren Zeitpunkt.

Bei der unmittelbaren Weiterverarbeitung wird das Gemisch Kunststoffgranulat 13 /Markierungsgranulat 12 nach dem Vermischen einem Spritzgußverfahren zugeführt. Das heißt es wird erhitzt, geschmolzen, extrudiert, in die entsprechende Form gepreßt und abgekühlt. Anschließend ist der gewünschte Artikel 14 fertig und weist die vorgegebenen physikalischen und/oder chemischen Eigenschaften auf.

In der Darstellung in Fig. 3 sind im fertigen Artikel sichtbare Fasern 12 an der Oberfläche Kennzeichnungsmerkmale in der Form von Fasern 12 dargestellt. Selbstverständlich sind auch andere Formen der Markierung möglich. Unter anderem auch optisch nicht sichtbare. In dem fertigen Kunststoffprodukt 14 sind dann Markierungssubstanzen 2 mit eingeschmolzen, deren physikalische und/oder chemische Eigenschaften dauerhaft auf der Oberfläche und/oder im Inneren des Kunststoffproduktes erkennbar und/oder nachweisbar sind.

### Zeichnungslegende

- 1.: Granulat
- 2.: Markierungssubstanzen
- 12: Markierungsgranulat
- 13: Kunststoffgranulat
- 14.: Endprodukt

## Patentansprüche

1. Verfahren zur Codierung von thermoplastisch gefertigten Kunststoffprodukten, welche mittels Spritzgussverfahren, Hohlblasverfahren, Folienextrusion, Folienkoextrusion, Dünnfilmgießen, Laminierung oder anderen bekannten Verfahren zu Endprodukten verarbeitet werden, wobei in das zu fertigende Kunststoffprodukt ein Kunststoffgranulat (13) und ein mit Markierungssubstanzen (2) versehenes Markierungsgranulat (12) mit eingeschmolzen werden, deren physikalische und/oder chemische Eigenschaften dauerhaft auf der Oberfläche und/oder im Inneren des Kunststoffproduktes erkennbar und/oder nachweisbar sind, wobei die Markierungssubstanz (2) einen höheren Schmelzpunkt aufweist als das zu verarbeitende Kunststoffgranulat (13), **dadurch gekennzeichnet, daß** auch das Markierungsgranulat (12) einen höheren Schmelzpunkt aufweist als das zu verarbeitende Kunststoffgranulat (13).

2. Verfahren nach Anspruch 1, **dadurch gekennzeichnet, daß** die physikalischen und/oder chemischen Eigenschaften der Markierungssubstanzen (2) nach der Verarbeitung unverändert bleiben.

3. Verfahren nach Anspruch 1 oder 2, **dadurch gekennzeichnet, daß** die Markierungssubstanzen (2) mittels des Markierungsgranulates (12) mit dem Kunststoffgranulat (13) vermischt, geschmolzen, extrudiert und ausgehärtet werden.

4. Verfahren nach Anspruch 1, 2 oder 3, **dadurch gekennzeichnet, daß** die Markierungssubstanzen (2) im fertiggestellten Kunststoffprodukt gezielt geformte Strukturen aufweisen, die der Struktur des Markierungsgranulates (12) entsprechen.

5. Verfahren nach Anspruch 1, 2 oder 3, **dadurch gekennzeichnet, daß** das Markierungsgranulat (12) als Fäden ausgebildet ist.

6. Verfahren nach einem der Ansprüche 1-5, **dadurch gekennzeichnet, daß** das Markierungsgranulat (12) mit einer entsprechenden Markierungssubstanz (2) in einer Schmelze mit dem Granulat verschmolzen wird.

7. Verfahren nach einem der Ansprüche 1-6, **dadurch gekennzeichnet, daß** die Markierungssubstanz (2) aus anorganischen Substanzen besteht.

8. Verfahren nach einem der Ansprüche 1-6, **dadurch gekennzeichnet, daß** die Markierungssubstanz (2) aus Photolumineszenzsubstanzen besteht.

9. Verfahren nach einem der Ansprüche 1-6, **dadurch gekennzeichnet, daß** die Markierungssubstanz (2) aus IR-Lumineszenzsubstanzen besteht.

10. Verfahren nach einem der Ansprüche 1-6, **dadurch gekennzeichnet, daß** die Markierungssubstanz (2) aus Elektrolumineszenz-Pigmenten besteht.

11. Verfahren nach einem der Ansprüche 1-6, **dadurch gekennzeichnet, daß** die Markierungssubstanz (2) aus Substanzen besteht, welche Upconversion Eigenschaften aufweisen.

12. Verfahren nach einem der Ansprüche 1-6, **dadurch gekennzeichnet, daß** die Markierungssubstanz (2) aus elektrisch leitenden Substanzen besteht.

13. Verfahren nach einem der Ansprüche 1-6, **dadurch gekennzeichnet, daß** die Markierungssubstanz (2) aus magnetischen Substanzen besteht.

14. Verfahren nach einem der Ansprüche 1-13, **dadurch gekennzeichnet, daß** die Markierungssubstanz (2) auf nanoskalierten Pigmenten basiert.

15. Verfahren nach einem der Ansprüche 1-14, **dadurch gekennzeichnet, daß** das Markierungsgranulat (12) bei der Herstellung mit gezielt geformten Strukturen ausgebildet wird.

## Claims

1. Method for coding thermoplastically produced plastics material products, which are processed by means of injection moulding, hollow blow moulding, film extrusion, film coextrusion, thin film casting, lamination or other known methods to form end products, also being fused into the plastics material product to be produced are plastics material granules (13) and marking granules (12) provided with marking substances (2), the physical and/or chemical properties of which can be permanently seen and/or detected on the surface and/or in the interior of the plastics material product , the marking substance (2) having a higher melting point than the plastics material granules (13) to be processed, **characterised in that** the marking granules (12) also have a higher melting point than the plastics material granules (13) to be processed.

2. Method according to claim 1, **characterised in that** the physical and/or chemical properties of the marking substances (2) remain unchanged after processing.

3. Method according to claim 1 or 2, **characterised in that** the marking substances (2), by means of the marking granules (12), are mixed, melted, extruded and cured with the plastics material granules (13).

4. Method according to claim 1, 2 or 3, **characterised in that** the marking substances (2) in the finished plastics material product have purposefully shaped structures, which correspond to the structure of the marking granules (12).

5. Method according to claim 1, 2 or 3, **characterised in that** the marking granules (12) are configured as threads.

6. Method according to any one of claims 1 to 5, **characterised in that** the marking granules (12) with a corresponding marking substance (2) are fused in a melt with the granules.

7. Method according to any one of claims 1 to 6, **characterised in that** the marking substance (2) consists of inorganic substances.

8. Method according to any one of claims 1 to 6, **characterised in that** the marking substance (2) consists of photoluminescent substances.

9. Method according to any one of claims 1 to 6, **characterised in that** the marking substance (2) consists of infrared luminescent substances.

10. Method according to any one of claims 1 to 6, **characterised in that** the marking substance (2) consists of electro-luminescent pigments.

11. Method according to any one of claims 1 to 6, **characterised in that** the marking substance (2) consists of substances, which have upconversion properties.

12. Method according to any one of claims 1 to 6, **characterised in that** the marking substance (2) consists of electrically conductive substances.

13. Method according to any one of claims 1 to 6, **characterised in that** the marking substance (2) consists of magnetic substances.

14. Method according to any one of claims 1 to 13, **characterised in that** the marking substance (2) is based on nanoscaled pigments.

15. Method according to any one of claims 1 to 14, **characterised in that** the marking granules (12) are configured with purposefully shaped structures during production.

## Revendications

1. Procédé pour le codage de produits réalisés en matière plastique thermoplastique et qui peuvent être travaillés par injection, par procédé de soufflage de corps creux, par extrusion en film, par coulée en film fin, par laminage ou par d'autres procédé connus pour obtenir les produits finis, un granulat en plastique (13) et un granulat (12) doté de substances de marquage (2), dont les propriétés physiques et/ou chimiques sont reconnaissables ou détectables durablement sur la surface et/ou à l'intérieur du produits en matière plastique, étant fondus dans le produit en matière plastique à usiner, la substance de marquage (2) ayant un point de fusion plus élevé que le granulat de plastique (13) à usiner, **caractérisé en ce que** le granulat de marquage (12) a également un point de fusion plus élevé que le granulat en plastique (13) à usiner.

2. Procédé selon la revendication 1, **caractérisé en ce que** les propriétés physiques et/ou chimiques des substances de marquage (2) restent inchangées après l'usinage.

3. Procédé selon la revendication 1 ou 2, **caractérisé en ce que** les substances de marquage (2) sont mélangées, fondues, extrudées et durcies par le biais des granulats de marquage (12) avec le granulat en plastique (13).

4. Procédé selon la revendication 1, 2 ou 3, **caractérisé en ce que** les substances de marquage (2) dans le produit plastique fini présentent des structures formées de façon ciblée qui correspondent à la structure du granulat de marquage (12).

5. Procédé selon la revendication 1, 2 ou 3, **caractérisé en ce que** le granulat de marquage (12) a la forme de fils.

6. Procédé selon l'une des revendications 1 à 5, **caractérisé en ce que** le granulat de marquage (12) est fusionné avec une substance de marquage correspondante dans une masse fusionnée avec le granulat.

7. Procédé selon l'une des revendications 1 à 6, **caractérisé en ce que** la substance de marquage (2) se compose de substances minérales.

8. Procédé selon l'une des revendications 1 à 6, **caractérisé en ce que** la substance de marquage se compose de substances photoluminescentes.

9. Procédé selon l'une des revendications 1 à 6, **caractérisé en ce que** la substance de marquage se compose de substances luminescentes en IR.

10. Procédé selon l'une des revendications 1 à 6, **caractérisé en ce que** la substance de marquage se compose de pigments électroluminescents.

11. Procédé selon l'une des revendications 1 à 6, **caractérisé en ce que** la substance de marquage (2) se compose de substances qui présentent des propriétés de conversion ascendante (upconversion).

12. Procédé selon l'une des revendications 1 à 6, **caractérisé en ce que** la substance de marquage (2) se compose de substances électriquement conductrice.

13. Procédé selon l'une des revendications 1 à 6, **caractérisé en ce que** la substance de marquage (2) se compose de substances magnétiques.

14. Procédé selon l'une des revendications 1 à 13, **caractérisé en ce que** la substance de marquage (2) se base sur des pigments de taille nanoscopique.

15. Procédé selon l'une des revendications 1 à 14, **caractérisé en ce que** le granulat de marquage (12) est mis en forme de façon ciblée lors de la fabrication.
